# EUROPÄISCHE PATENTSCHRIFT

(11) **EP 3 500 715 B1**
(45) Veröffentlichungstag und Bekanntmachung des Hinweises auf die Patenterteilung: **28.12.2022**
(21) Anmeldenummer: 17761022.7
(22) Anmeldetag: 10.08.2017
(51) Int. Cl.: E05F 11/48

(54) **VORRICHTUNG ZUR SPANNUNG EINES BOWDENZUGS EINES SEILZUG-FENSTERHEBERS**
DEVICE FOR TENSIONING OF A BOWDEN CABLE OF A CABLE WINDOW LIFTER
DISPOSITIF DE TENSION D'UN CABLE BOWDEN D'UN LÈVE-VITRE À CÂBLE

(30) Priorität: 17.08.2016 DE 202016005232 U
(43) Veröffentlichungstag der Anmeldung: 26.06.2019
(73) Patentinhaber: Brose Fahrzeugteile SE & Co. Kommanditgesellschaft, Bamberg, 96052 Bamberg (DE)
(72) Erfinder: STAHN, Armin, 96328 Küps (DE); KREILE, Michael, 96274 Itzgrund (DE); TAUBMANN, Udo, 96476 Bad Rodach (DE)
(74) Vertreter: Maikowski & Ninnemann Patentanwälte Partnerschaft mbB
(86) Internationale Anmeldenummer: PCT/EP2017/070270
(87) Internationale Veröffentlichungsnummer: WO 2018/033457

(56) Entgegenhaltungen:
- DE-C1- 3 432 178
- DE-C1- 19 852 977
- DE-U1-202008 011 934
- US-A- 4 657 523

## Beschreibung

Die Erfindung betrifft eine Vorrichtung zur Kompensation einer Seillose innerhalb eines Seilzug-Fensterhebers, dessen Seilzug wenigstens einen Abschnitt mit einem Bowden aufweist, gemäß dem Oberbegriff des Anspruchs 1, wobei ein das Bowdenende aufnehmende Seilführungselement in einer Aufnahme, insbesondere eines Seilausgangsgehäuses, axial verschieblich und durch eine Feder vorgespannt lagert.

Aus DE 20 2007 007 032 U1 und DE 198 52 977 C1 sind gattungsgemäße Vorrichtungen für Bowden-Fensterheber mit einem ein Bowdenrohrende aufnehmenden Seilführungselement bekannt, das verschiebbar in einer basisseitigen Aufnahme lagert und durch mindestens eine Druckfeder gegen das Bowdenrohrende elastisch vorgespannt ist. Sofern die Seilkraft die maximale Spannkraft der Druckfeder überschreitet, z. B. beim Anfahren der Schließposition der Fensterscheibe, wird das Seilführungselement axial in der Aufnahme verschoben, bis dieses auf einen zugeordneten Anschlag trifft oder die Feder den Blockzustand erreicht. Weitere vergleichbare Vorrichtungen gehen aus der US 4,657,523 A und der DE 34 32 178 C1 hervor.

Beim Erreichen des Blockzustandes bzw. eines Anschlags treten regelmäßig Geräusche auf, die vermieden oder zumindest gedämpft werden sollten.

In DE 20 2008 011 934 U1 wird ein Seilführungselement beschrieben, das aus einer Kombination von zwei Materialen besteht, wobei eines der beiden Materialien aus einem vergleichsweise elastischeren Material bestehen kann und geeignet ist, einen geräuschdämpfenden Anschlag zu bilden.

Es hat sich jedoch als nachteilig herausgestellt, dass die Standfestigkeit der elastischen Komponente nicht über einen hinreichend langen Zeitraum gewährleistet werden kann. Wenn das elastische Material im Blockzustand des Fensterhebers, also in der Schließposition der Fensterscheibe, über einen langen Zeitraum komprimiert bleibt und gleichzeitig erhöhten Temperaturen ausgesetzt ist, kommt es zu sogenannten Setzungen des Materials. Infolgedessen verringert sich die Materialdicke und das Material verhärtet. Die Wirksamkeit des Dämpfers nimmt also spürbar ab.

Der Erfindung liegt deshalb das Problem zugrunde, eine gattungsgemäße Vorrichtung derart auszubilden, dass eine dauerhaft gute dämpfende Wirkung des elastischen Materials auch dann erhalten bleibt, wenn sich das System - in dem die Vorrichtung zur Kompensation der Seillose eingebunden ist - für einen vergleichsweise langen Zeitraum und unter ungünstigen thermischen Bedingungen in ihrem Blockzustand befindet.

Erfindungsgemäß wird die Aufgabe durch die kennzeichnenden Merkmale des Anspruchs 1 gelöst. Demnach sind zwischen dem Seilführungselement und dessen an einem Seilantriebsgehäuse vorgesehener Aufnahme zwei Anschlagpaare derart ausgebildet, dass bei einer die Spannkraft der Feder übersteigenden Seilkraft zunächst die Anschläge eines ersten Anschlagpaars mit einem zwischengeordneten elastischen Dämpfer miteinander in Eingriff treten, wobei der Dämpfer aber nur teilweise komprimiert wird.

Die erfindungsgemäße Konstruktion gewährleistet also, dass nach einem konstruktiv vorgegebenen Weg der Kompression des Dämpfers die Anschläge eines zweiten, Anschlagpaars miteinander in Eingriff treten, so dass eine weitere, das elastische Material überlastende Beanspruchung ausgeschlossen wird.

Dabei können die Anschläge des zweiten Anschlagspaares völlig ungedämpft, also als harte Anschläge ausgebildet werden, so dass mit deren Eingriff jede weitere Komprimierung des Dämpfers zwischen den Anschlägen des ersten Anschlagpaars unterbunden wird. Eine übermäßige Geräuschbildung wird also durch das Dämpfungselement unterbunden, indem ein großer Teil der Bewegungsenergie des Seilführungselements bei seiner Komprimierung abgebaut wird, bevor die Anschläge des zweiten Anschlagpaars miteinander in Eingriff treten und so eine Überbeanspruchung des Dämpfungselements verhindern.

Gemäß einer Variante der Erfindung ist es auch möglich, das zweite Anschlagpaar mit einem Dämpfungselement auszustatten, wobei dieses aber sehr viel härter und somit weniger komprimierbar auszugestalten ist. Natürlich ist bei der Dimensionierung des Dämpfungselements des ersten Anschlagpaars in dieser Variante der Weg der Komprimierung des härteren Dämpfungselements zu berücksichtigen. Diese Variante ist zwar technisch etwas aufwändiger, sie ist hinsichtlich der Dämpfungswirkung aber auch wirksamer.

Nach einer bevorzugten Ausführungsform der Erfindung sind die Anschläge des ersten Anschlagpaars einerseits durch den äußeren Rand des Federgehäuses und andererseits durch die diesem zugewandte Fläche des Kopfes des Seilführungselements gebildet. Das zwischen den Anschlägen angeordnete Dämpfungselement des ersten Anschlagpaars kann in einfacher Weise als separates Element aus einem Elastomer oder aus Gummi ausgebildet sein. Es kann jedoch auch unter Anwendung der 2-Komponenten-Spritzgießtechnik am Kopf des Seilführungselements oder am freien Rand des Federgehäuses der Aufnahme angeformt werden.

Nach einer weiteren Variante der Erfindung ist zwischen den Anschlägen des ersten Anschlagpaars ein Dämpfungselement angeordnet, das als integraler Bestandteil des Federgehäuses ausgebildet ist. Dabei weist das Federgehäuse eine fensterartige Aussparung derart auf, dass sich ein federnder Abschnitt zwischen seitlichen Stützen erstreckt. Dieser federnde Abschnitt wirkt schließlich als Dämpfungselement, wenn der am Kopf des Seilführungselements angeformte Vorsprung auf den federnden Abschnitt einwirkt. Die Federwirkung endet weitgehend, wenn die an den Vorsprung seitlich angrenzenden Bereiche des Kopfes auf den zugeordneten Anschlagflächen der weniger elastischen seitlichen Stützen aufliegen.

Die Anschläge des zweiten Anschlagpaars, die eine Überbeanspruchung des elastischen Dämpfungselements sicher verhindern sollen, werden durch einen im inneren Kanal der Aufnahme vorspringenden inneren Anschlag einerseits und andererseits durch das freie Ende des inneren Führungsschaftes des Seilführungselements gebildet. Wie bereits voranstehend erwähnt, kann der innere Anschlag oder das freie Ende des inneren Führungsschaftes mit einem Dämpfungselement ausgestattet werden, das eine wesentlich geringere Elastizität und eine wesentlich höhere Dauerbelastbarkeit als das andere Dämpfungselement aufweist.

Die Erfindung umfasst auch Ausführungsformen, die eine kinematische Umkehr derart ausbilden, bei denen der elastischere Anschlag im Bereich des zweiten Anschlagpaares und der weniger elastische bzw. härtere Anschlag im Bereich des ersten Anschlagpaares angeordnet ist.

Nachfolgend wird die Erfindung anhand von zwei Ausführungsbeispielen näher erläutert. Es zeigen:
- Figur 1: Explosionsdarstellung eines Seilausgangsgehäuses mit federnd verschiebbarem Seilführungselement und Seiltrommel;
- Figur 2: perspektivische Darstellung des Zusammenbaus gemäß Figur 1;
- Figur 3a: Schnittdarstellung mit einem zwischen dem Kopf des Seilführungselements und dem freien Rand des Federgehäuses angeordneten (noch) nicht komprimierten Dämpfungselement;
- Figur 3b: wie Figur 3a, jedoch mit komprimiertem Dämpfungselement;
- Figur 4a: Schnittdarstellung eines Seilführungselements mit einem separaten Dämpfungselement in Montageposition;
- Figur 4b: wie Figur 3a, jedoch mit einem Dichtungselement in Funktionsposition, das auch am Kopf des Seilführungselements angespritzt sein könnte;
- Figur 5a: perspektivische Darstellung einer Erfindungsvariante mit im Federgehäuse integrierten stegartigen Dämpfungselement;
- Figur 5b: Schnittdarstellung durch die Vorrichtung gemäß Figur 5a.

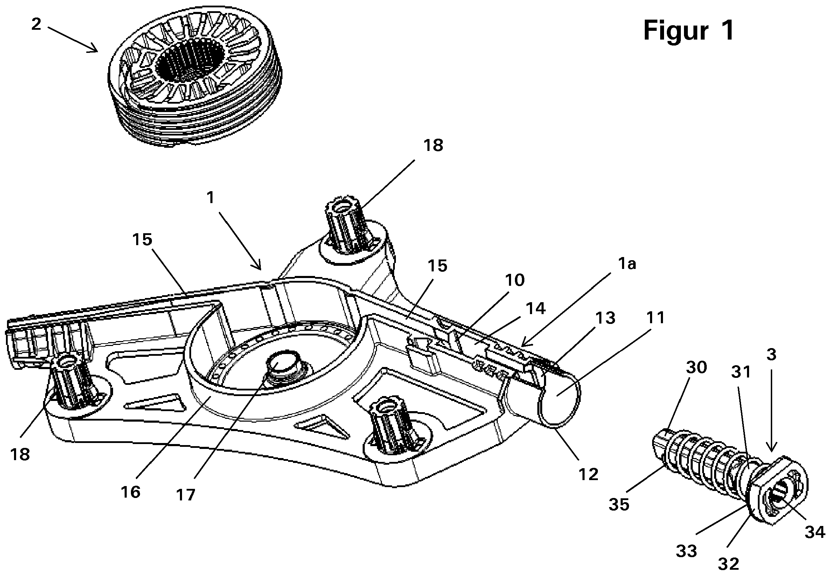

Figur 1 zeigt den prinzipiellen Aufbau eines typischen Seilausgangsgehäuses 1, das Bestandteil eines hier nicht näher dargestellten Fensterheberantriebs ist, wobei das Gehäuse 1 geeignet ist, über seine Befestigungsdome 18 mit einem Träger sowie dem motorischen Antrieb auf der Trockenraumseite des Trägers verbunden zu werden. Der durch den motorischen Antrieb zu betätigende Seilzug ist mit der Seiltrommel 2 kraftübertragend zu verbinden. Über einen Lagerzapfen 17 wird die Seiltrommel 2 im Seiltrommelgehäuse 16 gelagert. Die beidseitig von der Seiltrommel 2 abgehenden Seilabschnitte (nicht dargestellt) verlaufen zunächst durch die Seilkanäle 15 und durchqueren dann im Kanal 30a des Führungsschaftes 30 den inneren Kanal 14 und das Federgehäuse 11 der Aufnahme 1a des Seilausgangsgehäuses 1.

Das Seilführungselement 3 weist einen inneren Führungsschaft 30 auf, über den das Seilführungselement 3 im Kanal 14 der Aufnahme 1a verschiebbar geführt ist. An den inneren Führungsschaft 30 schließt sich ein äußerer Schaft 31 an, auf dem eine schraubenförmig gewickelte Druckfeder 35 lagert. Das äußere freie Ende des Seilführungselements 3 bildet einen Kopf 32, an dessen zur Aufnahme 1a weisenden Fläche ein elastisches Dämpfungselement 33 angeordnet ist.

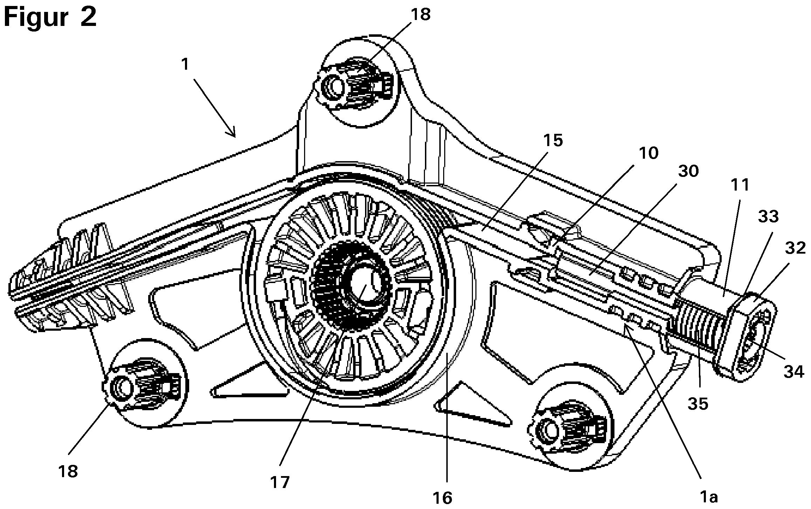

Im zusammengebauten Zustand (siehe Figur 2) stützt sich die Feder 35 einerseits innerhalb des Federgehäuses 11 an der Stützfläche 13 und andererseits am Kopf 32 bzw. dem vorgelagerten Dämpfungselement 33 ab. Der Seilkanal 30a des inneren Führungsschaftes 30 erweitert sich im Bereich des daran anschließenden äußeren Führungsschaftes 31 zu einer Bowdenrohr-Aufnahme 34, so dass die Spannkraft der Feder 35 einen axialen Druck auf das Bowdenrohr 40 ausüben kann, um das darin geführte Seil straff zu halten.

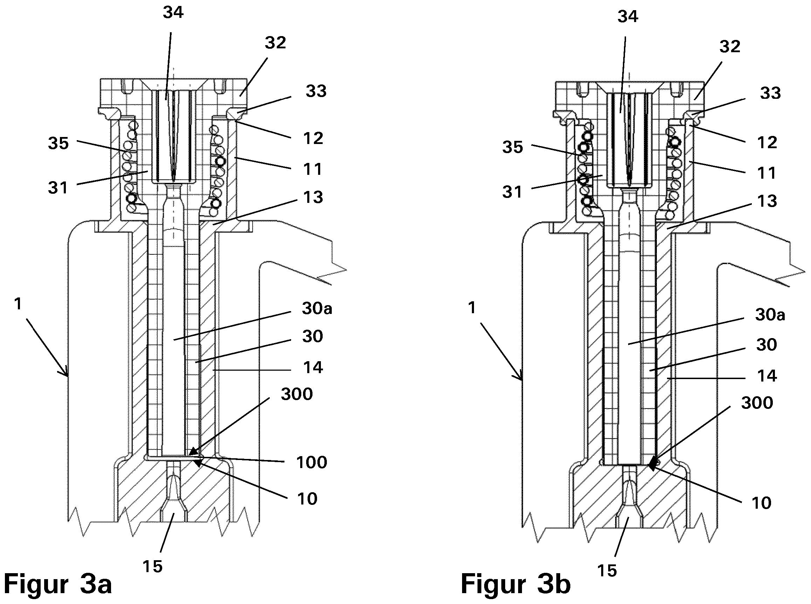

Der Schnitt von Figur 3a zeigt das Seilführungselement 3, dessen Dämpfungselement 33 den freien Rand 12 des Federgehäuses 11zwar bereits berührt, jedoch ohne dieses zu komprimieren. Zwischen dem freien Ende 300 des inneren Führungsschaftes 30 und dem Anschlag 10 der Aufnahme 1a des Gehäuses 1 ist deutlich ein Spalt 100 erkennbar. Erst bei einer weiteren Erhöhung der Seilkraft treten diese Anschläge 10, 300 miteinander in Eingriff (siehe Figur 3b), wobei das Dämpfungselement 33 auf den für diese Dimensionierung maximal möglichen Wert der Komprimierung zusammengepresst wird. Somit wird sichergestellt, dass das Dämpfungselement 33 nicht überlastet werden kann und seine dämpfenden Eigenschaften dauerhaft behält.

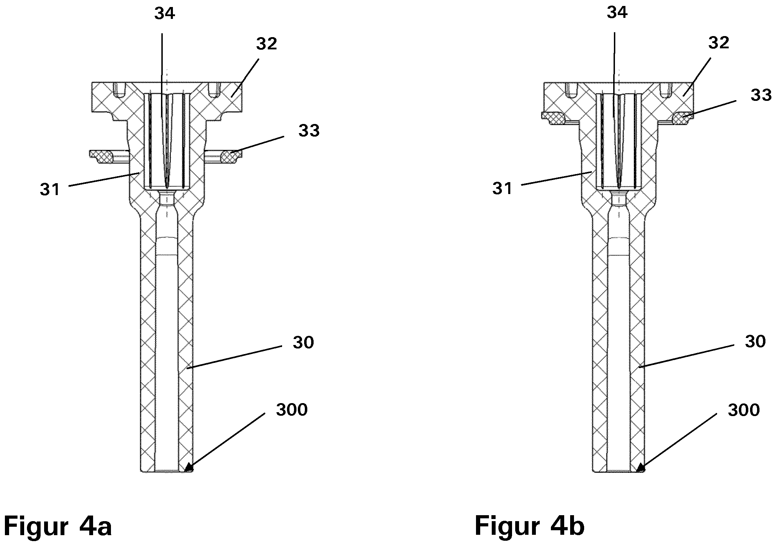

Mit den Darstellungen der Figuren 4a und 4b soll angedeutet werden, dass das Dämpfungselement 33 auf unterschiedlicher Weise in die erfindungsgemäße Vorrichtung eingebracht bzw. integriert werden kann. So ist nicht nur die Bereitstellung eines separaten Dämpfungselements 33 möglich, sondern auch ein Anspritzen des Dichtungselements 33 im Wege eines sogenannten 2-Komponenten-Spritzgießprozesses, bei dem zuerst die eine Komponente, z. B. der Grundkörper des Dämpfungselements 33, und anschließende die andere Komponente, z. B. die des Dichtungselements 33, erzeugt werden, wobei ein nicht lösbarer Verbund entsteht. Natürlich ist es auch möglich, das Dämpfungselement 33 an den freien Rand 12 des Federgehäuses 11 anzuspritzen.

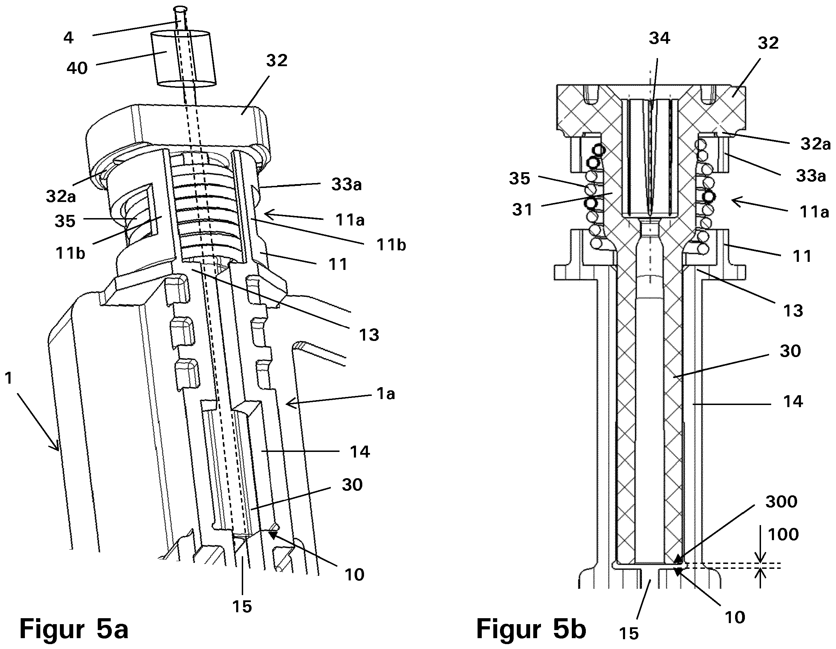

Die Figuren 5a und 5b zeigen eine Variante der Erfindung, die ohne ein separates Element und auch ohne ein weiteres Material für das Dämpfungselement auskommt. Zum Zwecke der Erzeugung der gewünschten Dämpfungswirkung ist ein elastisches Federelement 33a in das Federgehäuse 11 integriert. Hierfür ist im Federgehäuse 11 eine fensterartige Aussparung 11a vorgesehen, so dass sich zwischen seitlichen, axial gerichteten Stützen 11b am freien Ende des Federgehäuses 11 ein hierzu quer verlaufender federelastischer Steg erstreckt, der das Dämpfungselement 33a bildet. Ein an der Unterseite des Kopfes 32 des Seilführungselements 3 angeformter Vorsprung 32a stellt sicher, dass die Seilkraft definiert in den mittleren Bereich des integrierten Dämpfungselements 33a eingeleitet wird.

Die Dimensionierung wurde derart vorgenommen, dass die Durchbiegung des federnden Steges 33a dem axialen Maß des Vorsprungs 32a des Kopfes 32 entspricht und dabei keine Überlastung des Dämpfungselements 33a auftreten kann. Sobald die maximale elastische Deformation des Dämpfungselements 33a erreicht wird, treten die Anschlagflächen oberhalb der seitlichen Stützen 11b mit den zugeordneten Flächen des Kopfes 32 seitlich der Vorsprünge 32a in Eingriff und verhindern so eine Überlastung des integrierten Dämpfungselements 33a.

In dem vorliegenden Ausführungsbeispiel ist zusätzlich (aber nicht unbedingt erforderlich) ein weiteres Paar von Anschlägen 10, 300 vorgesehen, analog zur bereits beschriebenen Variante gemäß den Figuren 3a und 3b. Demnach wird das Seilführungselement 3 bei Erhöhung der Seilkraft weiter in die Aufnahme 1a hinein geschoben, und zwar bis der Spalt 100 zwischen den Anschlägen 10, 300 überwunden ist. Diese Anschläge sollten dann zur Anwendung kommen, wenn die seitlichen Stützen 11b des Federgehäuses 11 nicht geeignet sind, die maximal mögliche Stützkraft tragen zu können.

### Bezugszeichenliste

- 1: Gehäuse, Seilausgangsgehäuse
- 1a: Aufnahme für das Seilführungselement 3
- 10: innerer Anschlag
- 11: Federgehäuse
- 11a: Aussparung
- 11b: seitliche Stütze
- 12: äußerer Anschlag; freier Rand des Federgehäuses 11
- 13: Stützfläche für Feder 35
- 14: innerer Kanal
- 15: Seilkanal
- 16: Seiltrommelgehäuse
- 17: Lagerzapfen
- 18: Befestigungsdom
- 100: Spalt

- 2: Seiltrommel

- 3: Seilführungselement
- 30: innerer Führungsschaft
- 30a: Seilkanal des Führungsschaftes
- 31: äußerer Führungsschaft
- 32: Kopf
- 32a: Vorsprung
- 33: federelastische Dämpfungselement, separat ausgebildet
- 33a: federelastisches Dämpfungselement, integriert
- 34: Bowdenrohr-Aufnahme
- 300: freies Ende

- 4: Seil
- 40: Bowdenrohr

## Patentansprüche

1. Vorrichtung zur Kompensation einer Seillose innerhalb eines Seilzug-Fensterhebers, dessen Seilzug wenigstens einen Abschnitt mit einem Bowden aufweist,
o wobei ein das Bowdenende aufnehmendes Seilführungselement (3) in einer Aufnahme (1a) eines Seilantriebsgehäuses (1) der Vorrichtung axial verschiebbar lagert,
∘ wobei zwischen einer Stützfläche (13) der Aufnahme und einem Kopf (32) des Seilführungselements eine Feder (35) angeordnet ist, die den Seilzug unter Spannung hält und dadurch geeignet ist, Seillose zu kompensieren, und
o wobei am Seilführungselement und an dessen Aufnahme Anschlagflächen (12, 32) vorgesehen sind, die bei Belastung des Seilzugs miteinander in Eingriff treten können und dadurch eine weitere Kompensation der Feder unterbinden, wobei zwischen den Anschlägen ein elastisches, Anschlagsgeräusche dämpfendes Material (33) angeordnet ist
**dadurch gekennzeichnet,**
**dass**, zwischen dem Seilführungselement (3) und dessen Aufnahme (1a) an dem Seilantriebsgehäuse (1), zwei Anschlagpaare derart ausgebildet sind,
o dass bei einer die Spannkraft der Feder übersteigenden Seilkraft zunächst die Anschläge eines ersten Anschlagpaars (12, 32) mit einem zwischengeordneten Dämpfungselements (33, 33a) miteinander in Eingriff treten, und
o dass nach einem vorgegebenen Weg der Kompression des Dämpfungselements (33, 33a) die Anschläge eines zweiten, nicht oder härter gedämpften Anschlagpaars (10, 300) miteinander in Eingriff treten.

2. Vorrichtung nach Anspruch 1, **dadurch gekennzeichnet, dass** die Anschläge (12, 32) des ersten Anschlagpaars durch einen äußeren Rand (12) eines an dem Seilantriebsgehäuse (1) vorgesehenen Federgehäuses (11) und durch die dem äußeren Rand (12) zugewandte Fläche des Kopfes (32) des Seilführungselements (3) gebildet sind.

3. Vorrichtung nach den Ansprüchen 1 und 2, **dadurch gekennzeichnet, dass** das zwischen den Anschlägen (12, 32) angeordnete Dämpfungselement (33) des ersten Anschlagpaars (12, 32) als separates Element aus einem Elastomer oder aus Gummi ausgebildet ist.

4. Vorrichtung nach den Ansprüchen 1 und 2, **dadurch gekennzeichnet, dass** das zwischen den Anschlägen (12, 32) angeordnete Dämpfungselement (33) des ersten Anschlagpaars (12, 32) in 2-Komponenten-Spritzgießtechnik am Kopf (32) des Seilführungselements (3) oder am freien Rand (12) eines an dem Seilantriebsgehäuse (1) vorgesehenen Federgehäuses (11) der Aufnahme (1a) angespritzt ist.

5. Vorrichtung nach den Ansprüchen 1 und 2, **dadurch gekennzeichnet, dass** das zwischen den Anschlägen (12, 32) angeordnete Dämpfungselement (33a) des ersten Anschlagpaars (12, 32) als integrierter Bestandteil eines an dem Seilantriebsgehäuse (1) vorgesehenen Federgehäuses (11) ausgebildet ist.

6. Vorrichtung nach Anspruch 5, **dadurch gekennzeichnet, dass** das Federgehäuse (11) eine Aussparung (11a) aufweist, so dass sich ein federnder Abschnitt (33a) zwischen den seitlichen Stützen (11b) erstreckt und als Dämpfungselement (33a) wirken kann, wobei ein am Kopf (32) angeformter Vorsprung (32a) auf das Dämpfungselement (33a) einwirken kann, bis die an den Vorsprung (32a) seitlich angrenzenden Bereiche des Kopfes (32) auf den Anschlagflächen der nicht elastischen seitlichen Stützen (11b) aufliegen.

7. Vorrichtung nach Anspruch 1, **dadurch gekennzeichnet, dass** die Anschläge (10, 300) des zweiten Anschlagpaars durch einen im inneren Kanal (14) der Aufnahme (1a) vorspringenden inneren Anschlag (10) und das freie Ende (300) des inneren Führungsschaftes (30) des Seilführungselements (3) gebildet sind.

8. Vorrichtung nach einem der voranstehenden Ansprüche, **dadurch gekennzeichnet, dass** der innere Anschlag (10) oder das freie Ende (300) des inneren Führungsschaftes (30) mit einem Dämpfungselement ausgestattet ist, das eine wesentlich geringere Elastizität und eine wesentlich höhere Dauerbelastbarkeit als das andere Dämpfungselement (33, 33a) aufweist.

9. Vorrichtung nach einem der voranstehenden Ansprüche, **dadurch gekennzeichnet, dass** das Seilausgangsgehäus (1) Teil eines Fensterheberantriebs der Vorrichtung oder eines Trägerelements, insbesondere einer Trägerplatte eines Türmoduls der Vorrichtung ist.

10. Vorrichtung nach einem der voranstehenden Ansprüche, **gekennzeichnet durch** eine kinematische Umkehr derart, dass der elastischere Anschlag im Bereich des zweiten Anschlagpaares (10, 300) und der weniger elastische bzw. härtere Anschlag im Bereich des ersten Anschlagpaares (12, 32) angeordnet sind.

## Claims

1. Device for compensating of cable play within a cable window lifter, whose cable comprises at least one section with a Bowden,
o wherein a cable-guiding element (3) accommodating the end of the Bowden is mounted axially displaceable in a receptacle (1a) of a cable outlet housing (1) of the device,
o wherein a spring (35) is arranged between a support surface (13) of the receptacle and a head (32) of the cable-guiding element is arranged, which spring keeps the cable under tension and thereby is configured for compensating the cable play,
o wherein stop surfaces (12, 32) on the cable-guiding element and its receptacle are provided, which are configured to engage with one another when a load is applied to the cable and thereby prevent further compensation of the spring, wherein an elastic, stop-noises dampening material (33) is arranged between the stop surfaces,
**characterized in that**
first and second pair of stops are formed between the cable-guiding element (3) and its receptacle (1a) on the cable outlet housing (1) such that
o in the case of a cable force exceeding the tensioning force of the spring, firstly the stops of the first pair of stops (12, 32) engage with an intermediate damper element (33, 33a), and
o after a predetermined length of compression of the damper element (33, 33a), the stops of a second pair of stops (10, 300), which are not dampening or dampening harder, engage with each other.

2. Device according to claim 1, **characterized in that** the stops (12, 32) of the first pair of stops are formed by an outer edge (12) of a spring housing (11) provided on the cable outlet housing (1) and by the surface of the head (32) of the cable guide element (3) facing the outer edge (12).

3. Device according to claims 1 and 2, **characterized in that** the damping element (33) arranged between the stops (12, 32) of the first pair of stops (12, 32) is designed as a separate element out of elastomer or out of rubber.

4. Device according to claims 1 and 2, **characterized in that** the damping element (33) arranged between the stops (12, 32) of the first pair of stops (12, 32) is injection-molded in 2-component injection molding technology to the head (32) of the cable guiding element (3) or to the free edge (12) of the spring housing (11) provided on the cable outlet housing (1) of the receptacle (1a).

5. Device according to claims 1 and 2, **characterized in that** the damping element (33a) arranged between the stops (12, 32) of the first pair of stops (12, 32) is formed as an integral component of a spring housing (11) provided on the cable outlet housing (1).

6. Device according to claim 5, **characterized in that** the spring housing (11) comprises a clearance (11a), so that a resilient section (33a) extends between the lateral supports (11b) and can act as a damping element (33a), wherein a protrusion (32a) integrally designed on the head (32) can act on the damping element (33a), until the areas of the head (32) laterally adjoining the protrusion (32a) rest on the stop surfaces of the stops of the non-elastic lateral supports (11b).

7. Device according to claim 1, **characterized in that** the stops (10, 300) of the second pair of stops are formed by an inner stop (10) protruding in the inner channel (14) of the receptacle (1a) and the free end (300) of the inner guide shaft (30) of the cable-guiding element (3).

8. Device according to one of the of the preceding claims, **characterized in that** the inner stop (10) or the free end (300) of the inner guide shaft (30) is equipped with a damping element, which features a much lower elasticity and a much higher limiting continuous thermal withstand power than the other damping element (33, 33a).

9. Device according to one of the preceding claims, **characterized in that** the cable outlet housing (1) is a component of a window lifter drive of the device or a carrier element, in particular a carrier plate of a door module of the device.

10. Device according to one of the preceding claims, **characterized by** a kinematical reversal of the sort that the elastic stop is arranged in the region of the second pair of stops (10, 300) and the less elastic and/or harder stop is arranged in the region of the first pair of stops (12, 32).

## Revendications

1. Dispositif de compensation d'un mou de câble dans un lève-vitre à commande par câble, dont le câble de commande présente au moins une section avec un câble Bowden,
- dans lequel un élément de guidage de câble (3) recevant l'extrémité du câble Bowden loge de manière mobile axialement dans un logement (1a) d'un boîtier d'entraînement de câble (1) du dispositif,
- dans lequel un ressort (35) est agencé entre une surface d'appui (13) du logement et une tête (32) de l'élément de guidage de câble, lequel maintient sous tension le câble de commande et est ainsi approprié afin de compenser le mou de câble, et
- dans lequel des surfaces de butée (12, 32) sont prévues au niveau de l'élément de guidage de câble et au niveau de son logement, lesquelles peuvent entrer en prise entre elles lors de la sollicitation du câble de commande et empêchent ainsi une autre compensation du ressort, dans lequel un matériau (33) élastique amortissant des bruits de butée est agencé entre les butées,
**caractérisé en ce**
**que** deux paires de butées sont réalisées entre l'élément de guidage de câble (3) et son logement (1a) au niveau du boîtier d'entraînement de câble (1) de telle manière
- **qu'**en cas de force de câble dépassant la force de serrage du ressort, tout d'abord les butées d'une première paire de butées (12, 32) entrent en prise entre elles avec un élément d'amortissement (33, 33a) intercalé, et
- **qu'**après une course prédéfinie de compression de l'élément d'amortissement (33, 33a), les butées d'une seconde paire de butées (10, 300) non amortie ou plus durement entrent en prise entre elles.

2. Dispositif selon la revendication 1, **caractérisé en ce que** les butées (12, 32) de la première paire de butées sont formées par un bord extérieur (12) d'un boîtier de ressort (11) prévu au niveau du boîtier d'entraînement de câble (1) et par la surface tournée vers le bord extérieur (12) de la tête (32) de l'élément de guidage de câble (3).

3. Dispositif selon les revendications 1 et 2, **caractérisé en ce que** l'élément d'amortissement (33) agencé entre les butées (12, 32) de la première paire de butées (12, 32) est réalisé en tant qu'élément séparé en un élastomère ou en caoutchouc.

4. Dispositif selon les revendications 1 et 2, **caractérisé en ce que** l'élément d'amortissement (33) agencé entre les butées (12, 32) de la première paire de butées (12, 32) est moulé par injection dans la technique de moulage par injection à deux composants sur la tête (32) de l'élément de guidage de câble (3) ou sur le bord libre (12) d'un boîtier de ressort (11) prévu au niveau du boîtier d'entraînement de câble (1) du logement (1a).

5. Dispositif selon les revendications 1 et 2, **caractérisé en ce que** l'élément d'amortissement (33a) agencé entre les butées (12, 32) de la première paire de butées (12, 32) est réalisé en tant que constituant intégré d'un boîtier de ressort (11) prévu au niveau du boîtier d'entraînement de câble (1).

6. Dispositif selon la revendication 5, **caractérisé en ce que** le boîtier de ressort (11) présente un évidement (11a) de sorte qu'une section (33a) élastique s'étende entre les appuis (11b) latéraux et puisse agir en tant qu'élément d'amortissement (33a), dans lequel une saillie (32a) formée au niveau de la tête (32) peut agir sur l'élément d'amortissement (33a) jusqu'à ce que les zones contiguës latéralement à la saillie (32a) de la tête (32) reposent sur les surfaces de butée des appuis (11b) latéraux non-élastiques.

7. Dispositif selon la revendication 1, **caractérisé en ce que** les butées (10, 300) de la seconde paire de butées sont formées par une butée (10) intérieure en saillie dans le canal intérieur (14) du logement (1a) et l'extrémité libre (300) de la tige de guidage (30) intérieure de l'élément de guidage de câble (3).

8. Dispositif selon l'une quelconque des revendications précédentes, **caractérisé en ce que** la butée intérieure (10) ou l'extrémité libre (300) de la tige de guidage intérieure (30) est configurée avec un élément d'amortissement qui présente une élasticité sensiblement plus faible et une durabilité sensiblement plus élevée que l'autre élément d'amortissement (33, 33a).

9. Dispositif selon l'une quelconque des revendications précédentes, **caractérisé en ce que** le boîtier de sortie de câble (1) fait partie d'un entraînement de lève-vitre du dispositif ou d'un élément de support, en particulier d'une plaque de support d'un module de porte du dispositif.

10. Dispositif selon l'une quelconque des revendications précédentes, **caractérisé par** une inversion cinématique de telle manière que la butée plus élastique soit agencée dans la zone de la seconde paire de butées (10, 300) et la butée moins élastique ou plus dure soit agencée dans la zone de la première paire de butées (12, 32).
